(19) Europäisches Patentamt
European Patent Office
Office européen des brevets

(11) **EP 2 779 504 A1**

(12) **EUROPEAN PATENT APPLICATION**

(43) Date of publication:
**17.09.2014 Bulletin 2014/38**

(51) Int Cl.:
***H04L 1/00*** (2006.01)

(21) Application number: **13305274.6**

(22) Date of filing: **12.03.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **ST-Ericsson SA**
**1228 Plan-les-Ouates (CH)**

(72) Inventor: **Dhayni, Achraf**
**06220 VALLAURIS (FR)**

(74) Representative: **Hirsch & Associés**
**58, avenue Marceau**
**75008 Paris (FR)**

(54) **Adapted bit loading for OFDM system using modulus and phase of estimated transfer function of the communication channel**

(57)     It is proposed a method for emitting an orthogonal frequency division multiplexing signal through a communication channel ($C_{AB}$) by an emitter (A), comprising:

Acquiring data to be transmitted,

De-multiplexing the data over sub-carriers and allocating an amount of bits of the data to the sub-carriers, according to information about the transmission conditions of the sub-carriers over the communication channel ($C_{AB}$),

to generate frequency symbols ($X_1[k]$);

Performing a frequency-to-time conversion of said frequency symbols to generate time symbols ($x_1(n)$), said time symbols being serialized and emitted over the communication channel ($C_{AB}$),

wherein the information is determined from the modulus and the phase of an estimated transfer function ($\tilde{H}$) of the communication channel ($C_{AB}$).

Fig. 3

**Description**

FIELD OF THE INVENTION

The invention relates to the field of multicarrier communications systems and more particularly to Orthogonal Frequency-Division Multiplexing (OFDM) systems including wireless OFDM systems

BACKGROUND OF THE INVENTION

Orthogonal Frequency-Division Multiplexing (OFDM), also referred to as "multi-carrier modulation" (MCM) or "discrete multi-tone modulation" (DMTM), splits up and encodes high-speed incoming serial data, modulating it over a plurality of different carrier frequencies (called "subcarriers") within a communication channel to transmit the data from one user to another. The serial information is broken up into a plurality of sub-signals that are transmitted simultaneously over the subcarriers in parallel. The communication channel can then be considered as a set of sub-channels to which are respectively assigned one of the subcarrier and within which is transmitted one "sub-signal".

By spacing the subcarrier frequencies at intervals of the frequency of the symbols to transmit, the peak power component of each modulated subcarrier lines up exactly with zero power components of the other modulated subcarriers, thereby providing orthogonality (independence and separability) of the individual subcarriers. This allows a good spectral efficiency (close to optimal) and minimal inter-channel interference (ICI), i.e. interferences between the subcarriers.

For these reasons, OFDM is used in many applications. Many digital transmission systems have adopted OFDM as the modulation technique such as digital video broadcasting terrestrial TV (DVB-T), digital audio broadcasting (DAB), terrestrial integrated services digital broadcasting (ISDB-T), digital subscriber line (xDSL), WLAN systems, e.g. based on the IEEE 802.11, cable TV systems, etc.

In order to optimize further the transmission between an emitter and a receiver, some techniques have been deployed by taking into account knowledge about the channel through which the communications are performed.

Among these techniques, the adaptive bit loading is often used in OFDM systems. Adaptive bit loading (or simply "bit loading") consists in assigning bits to sub-channels (i.e. to sub-carriers) according to their respective transmission conditions. More concretely, it may consist in allowing more bits to be transmitted to sub-carrier frequencies corresponding to sub-channels with higher quality transmission conditions, and less bit to frequencies corresponding to lower quality sub-channels.

Such a policy allows adapting the transmission closely to the state of the communication channel according to the used frequencies. It enables increasing the channel capacity, improving the transmission quality (i.e. for instance the BER, Bit Error Rate), and also reducing the hardware complexity. In a 4x2 MIMO (Multiple Input Multiple Output) OFDM system, for example, the capacity may be increased by as much as 1.5 bps/Hz.

In general, and especially in an OFDM-based communication system, the transmitter cannot have a direct access to channel state information. It should then rely on indirect means to acquire this information on the channel state. In OFDM systems, the communication channel has no reciprocity; in other words, the emitter cannot determine the channel state information (CSI) for the channel towards the receiver on the basis of an assessment of the quality of the data received from the receiver.

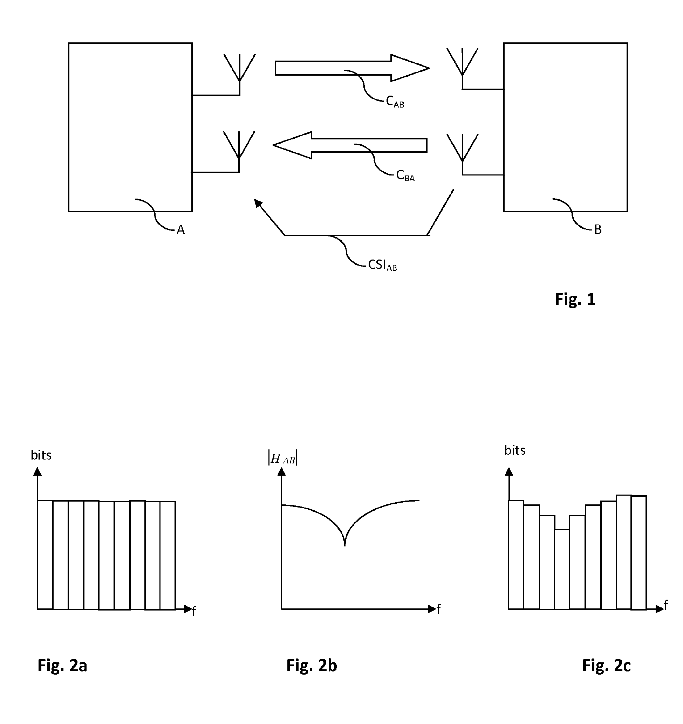

FIG.1 depicts the usual solution for this problem.

An emitter A and a receiver B can communicate through a communication channel $C_{AB}$. This communication channel $C_{AB}$ corresponds to the communication from the emitter A to the receiver B. When the emitter and the receiver exchange their role and when the receiver B transmits data to the emitter A, it uses another communication channel $C_{BA}$.

Both of these communication channels $C_{AB}$, $C_{BA}$ can be associated with a transfer function, respectively $H_{AB}$, $H_{BA}$.

The receiver B can estimate the transfer function $H_{AB}$ by assessing the data received from the emitter A through the communication channel $C_{AB}$.

The transfer function can only be estimated, thanks to channel estimation algorithms implementer by the receiver B, so as to generate the channel state information $CSI_{AB}$. This information can then be fed back to the emitter A. According to this channel state information $CIS_{AB}$, the emitter A can have some knowledge about the communication condition of the channel $C_{AB}$ (i.e. about its transfer function $H_{AB}$) and make use of this to adapt the bit loading of the transmitted signals to the receiver B over the communication channel $C_{AB}$.

The channel estimation algorithms deployed at the receiver B consist typically in determining an estimation of the transfer function $H_{AB}$. The modulus, or magnitude, $|H_{AB}|$ is then fed back as channel state information $CSI_{AB}$ to the emitter A.

Then, the bit loading can be simply deduced as a linear function of this modulus.

FIGS. 2a, 2b, 2c depict how the bit loading can be adapted from the modulus $|H_{AB}|$ of the transfer function.

FIG. 2a shows a flat bit loading. Each sub-channel is associated with a different value of the frequency f along the abscise axe, and corresponds to the same amount of bits, along the ordinate axis.

FIG. 2b depicts an example of a modulus $|H_{AB}|$ of the transfer function, variable according to the frequency f.

FIG. 2c shows how the modulus $|H_{AB}|$ can be used for allocating a variable amount of bits depending on the value of this modulus for the corresponding frequency.

In OFDM system, especially in WLAN OFDM system, the channel state information should be fed back regularly, because of the fast fading of the communication channel and because the time between two refreshes of the CSI should be lower than the coherence time.

This constraint, as well as the additional data to be transmitted over the communication channels, forms a burden for the OFDM system. However, they are counter-balanced by the advantages provided by the adaptive bit loading based on this CSI.

However, it is important to keep the advantage provided by the adaptive bit loading mechanism higher than its cost. Consequently, there is a need for a solution permitting to increase further the adaptation of the bit loading to the transmission conditions of the communication channel $C_{AB}$.

## SUMMARY OF THE INVENTION

An object of embodiments of the present invention is to alleviate at least partly the above mentioned drawbacks.

This is achieved with a method for emitting an orthogonal frequency division multiplexing signal through a communication channel by an emitter, comprising:

- Acquiring data to be transmitted,
- De-multiplexing said data over sub-carriers and allocating an amount of bits of said data to said sub-carriers, according to information about the transmission conditions of said sub-carriers over said communication channel, to generate frequency symbols $X_l[k]$;
- Performing a frequency-to-time conversion of said frequency symbols to generate time symbols $x_l(n)$, said time symbols being serialized and emitted over said communication channel,
  wherein said information is determined from the modulus and the phase of an estimated transfer function $\tilde{H}$ of said communication channel.

According to embodiments of the invention, the method may comprise one or several of the following features:

- said estimated transfer function is determined by inserting pilot symbols within said data to be transmitted and from said pilot symbols as sent and as received.
- said estimated transfer function is determined for each packets of said orthogonal frequency division multiplexing signal.
- said estimated transfer function is determined by a receiver of said orthogonal frequency division multiplexing signal, on the basis of said signal.
- said modulus and said phase are inserted into a channel state information sent by said receiver to said emitter.
- said information is determined as an error vector magnitude computed from said modulus and said phase.
- said error vector magnitude SEVM(k) is computed from said modulus $|\tilde{H}(k)|$ and from said phase $\arg(\tilde{H}(k))$ by:
  $$S_{EVM}(k) = \left\| |\tilde{H}(k)| \angle \arg(\tilde{H}(k)) - 1 \right\|$$

Another aspect of the invention relates to a computer program product comprising a computer readable medium, having thereon a computer program comprising program instructions, the computer program being loadable into a data-processing unit and adapted to cause execution of this method when the computer program is run by the data-processing unit.

Another aspect of the invention relates to an emitter for emitting an orthogonal frequency division multiplexing signal through a communication channel, comprising

means for acquiring data to be transmitted,

serial-to-parallel convertor for de-multiplexing said data over sub-carriers,

modulator for allocating an amount of bits of said data to said sub-carriers according to information about the transmission conditions of said sub-carriers over said communication channel, so as to generate frequency symbols $X_l[k]$;

frequency-to-time transformer for performing a frequency-to-time transformation of said frequency symbols to generate time symbols $x_l(n)$,

parallel-to-serial convertor for serializing said time symbols,

means for emitting them over said communication channel, and

evaluation circuitry for determining said information from the modulus and the phase of an estimated transfer function $\tilde{H}$ of said communication channel.

According to embodiments of the invention, the emitter may comprise one or several of the following features:

- said evaluation circuitry is adapted to receive channel state information comprising said modulus and said phase.
- said evaluation circuitry is adapted to determine as said information an error vector magnitude computed from said modulus and said phase.
- said evaluation circuitry computes said error vector magnitude $SEVM(k)$ from said modulus $|\tilde{H}(k)|$ and from said phase $\arg(\tilde{H}(k))$ by: $SEVM(k) = \||\tilde{H}(k)|\angle\arg(\tilde{H}(k))-1\|$

Another aspect of the invention relates to a receiver for receiving an orthogonal frequency division multiplexing signal from an emitter through a communication channel, comprising

- a receiving function module comprising a serial-to-parallel convertor for de-multiplexing said signal into a set of time symbols $y_l(n)$, and a time-to-frequency transformer for performing a time-to-frequency transformation to generate frequency values $Y_l(k)$ from said time symbols, and,
- a channel estimation module adapted for determining an estimated transfer function $\tilde{H}$ of said communication channel on the basis of said signal, inserting a modulus and a phase of said estimated transfer function into channel state information and sending said channel state information to said emitter.

According to embodiments of the invention, the receiver may comprise the following feature: said channel estimation module is adapted to determine said estimated transfer function $\tilde{H}$ from said frequency values $Y_l(k)$.

Another aspect of the invention relates to a system comprising such an emitter and such a receiver.

Further features and advantages of embodiments of the invention will appear from the following description of some embodiments of the invention, given as nonlimiting examples, with reference to the accompanying drawings listed hereunder.

<u>BRIEF DESCRIPTION OF THE DRAWINGS</u>

FIG.1 depicts the context in which the invention can be applied.

FIGS. 2a, 2b, 2c depict how the bit loading can be adapted from the modulus of the transfer function

FIG. 3 illustrates a simplified and high-level block diagram of an OFDM system according to embodiments of the invention.

FIG. 4 shows simulation results in terms of BER vs. Eb/N0 (energy per bit to noise power spectral density ratio) for a 64 QAM SISO Rayleigh channel.

<u>DETAILED DESCRIPTION OF EMBODIMENTS OF THE INVENTION</u>

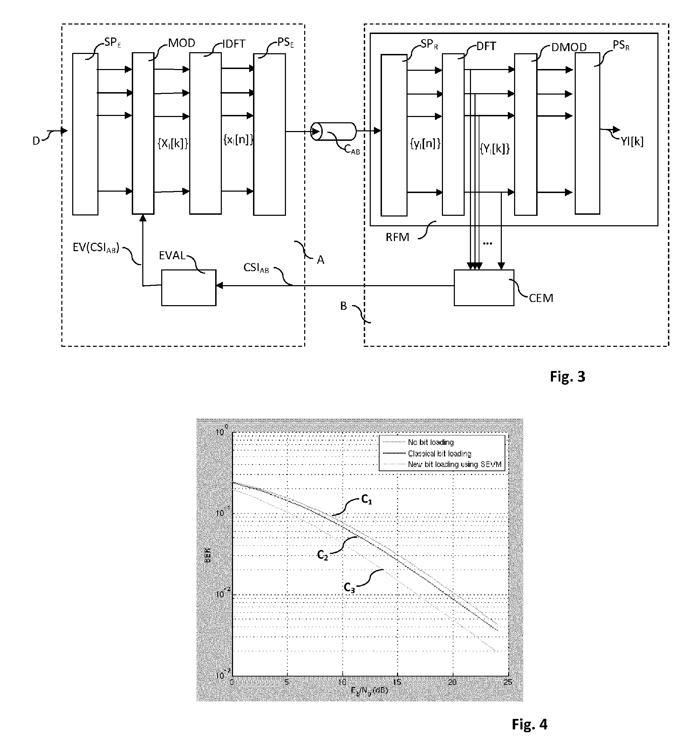

FIG. 3 illustrates a simplified and high-level block diagram of an OFDM system comprising an emitter A and a receiver B connected by a communication channel $C_{AB}$. This communication channel is usually (but not necessarily) wireless and perturbed by noise.

The principle of this OFDM system consists in transmitting several symbols (or signal) in parallel by assigning to each of them a different sub-carrier, each sub-carrier being orthogonal to the others. The number N of subcarriers depends on the total bandwidth and on the duration of a symbol (i.e. the size of the time window in which the receiver can capture the transmitted symbols).

The data D to be transmitted, initially in the frequency domain, are transformed into the time domain and modulated for transmission over the communication channel $C_{AB}$. The receiver B transforms the received signals back to the frequency domain to extract the transmitted symbols.

More precisely, the data D to be transmitted by the emitter A are first appropriately encoded and then sent to a serial-to-parallel convertor $SP_E$. This function block aims in de-multiplexing data D into individual "streams" corresponding to the N subcarriers.

In addition, a modulator MOD allocates an amount of bits of said data D to each of these subcarriers according to information about the transmission conditions of the sub-carriers over the communication channel $C_{AB}$.

The output of the modulator MOD consists in a vector of frequency symbols $X_l[k]$, where "k" ranges from 1 to N-1 and "1" represents the ordinal number of the OFDM symbol to be transmitted.

Here and in the following descriptions, the variable k will be used for the frequency domain and the variable n for time domain.

In the figure 1, the curly brackets indicate a set of individual symbols associated with arrows. They are used to prevent having references for each arrow and helps simplifying and clarifying the figure 1.

This number N is equal to the number of subcarriers used for the transmission over the communication channel $C_{AB}$. It depends on the standard: for instance according to WLAN 802.11a (on which relies the embodiment depicted on figure 5a), 52 subcarriers are used (48 data subcarriers + 4 pilot subcarriers), and 12 (6 on the "left" and 6 on the "right") subcarriers are not used (zero subcarriers).

The information about the transmission conditions of the sub-carriers over the communication channel can be determined from the Channel State Information, $CSI_{AB}$ of the channel $C_{AB}$ which can be generated by the receiver B and sent back to the emitter A.

The emitter A can receive this channel state information $CSI_{AB}$ through receiving means (Rx). In fact, both emitter A and receiver B are named here according to their role regarding a communication session flowing from A to B through the communication channel $C_{AB}$. Both of them, however, comprise receiving (Rx) and transmitting means (Tx) and can play both. The transmission of the channel state information $CSI_{AB}$ is performed by using the reverse roles, compared to the flow of the communication session (i.e. data). This is clearly apparent on FIG. 1.

It will be explained later how the channel state information $CSI_{AB}$ is determined.

According to this CSI (and to the information determined from it), the modulation density can be adapted on a subcarrier-by-subcarrier basis.

Several algorithms have been proposed so far to implement an adaptive bit and/or power loading mechanism in OFDM systems. The optimal adaptive scheme, which achieves the Shannon capacity for a fixed transmit power, is the water filing distribution of power over the frequency selective channel. This mechanism has been described, for example, in R. G. Gallager, *"Information Theory and Reliable communication",* Willey, New-York, 1968. However, while the water filing distribution will indeed yield to the optimal solution, it is difficult to compute and thus bring high burden to the emitter and receiver capacities. It all cases, the best scenario is when water filling and bit loading are employed together to optimize the transmission performance.

Many other algorithms have been described in the literature, which can be classified in two main categories: those trying to maximize the data rate and those aiming at maximizing the performance at a given data rate (usually called "margin-adaptive" algorithms).

Water filling is another way that can be used in parallel of the bit loading mechanism to optimize the transmission performance. Water filling is used to send more power over better sub-channels, whereas bit loading is used to send more bits over better sub-channel.

The principle underlying the Adaptive Bit loading (ABL) can be modeled as the maximization of $\sum_{i=1}^{N} b_i$, under

the constraint $\dfrac{\sum_{i=1}^{N} b_i\, p_i}{\sum_{i=1}^{N} b_i} \leq P_T$, wherein $b_i$ and $p_i$ are the number (or amount) of bits and BER (Bit Error Rate) of the $i^{th}$ subcarrier respectively. N is the number of used subcarriers and $P_T$ is the given target mean BER across all subcarriers.

The BER can be simply derived from the channel state information $CSI_{AB}$ received from the receiver B.

A short panorama of various algorithms is provided in the article *"On the Use of Adaptive Loading Algorithms in MIMO-OFDM systems"* by F. Sarabchi and M. E. Kalantari, in Proc. of ICWN, pp.326-330, 2006.

As the invention is independent of the algorithm used for determining the bit loading of the subcarriers, the possible algorithms will not be described further. The man of the art is able to deploy the needed algorithm according to the constraint of the project he or she is working on (computing resources, energy cost, silicon footprint, etc.)

The symbols $\{X_l[k]\}$ which are outputted by the modulator MOD are provided to a frequency-to-time transformer IDFT. This frequency-to-time transformer can perform an inverse discrete Fourier Transform of the symbols $\{X_l[k]\}$ to generate symbols $\{x_l[n]\}$ in the time domain.

Traditionally, symbols in the frequency domain are written in upper-case letter, whereas symbols in the time domain are written in lower-case letter.

These symbols $\{x_l[n]\}$ are then multiplexed, or serialized, by the parallel-to-serial convertor $PS_E$ and emitted over the communication channel $C_{AB}$, constituting an OFDM signal.

The communication channel can be associated with a transfer function $h_l(n)$. It represents the channel multipath behavior, delay, and complex attenuation. The time-domain transfer function (also called channel impulse response) may vary over time (from one OFDM symbol to another) and is therefore indexed by the number 1 of the transmitted symbol. The time domain transfer function $h_l(n)$ represents a multipath channel model and is therefore indexed by the number n representing the time delay of each of the considered paths of the multipath model.

The multiplexer $PS_E$ modulates the orthogonal subcarriers by the symbols to be transmitted.

The transmitted OFDM symbol $x_l(n)$ signal spectrum is the sum in the frequency domain of the orthogonal subcarrier sinc functions that are superposed over each other. The individual symbols can be independently modulated by using different types of modulations techniques, like for instance QAM (Quadrature Amplitude Modulation) or PSK (Phase-Shift Keying).

At the receiver B, the received symbols can be expressed with the typical following equation:

$$y_l[n] = \frac{1}{N} \sum_{k=0}^{N-1} H_l[k] X_l[k] e^{j2\pi(k+\varepsilon)(n/N)} + z_l[n]$$

Where:

- n, k represent variable over the time and frequency domains respectively.
- $H_l$ is the channel transfer function during the $l^{th}$ symbol.
- N is the number of subcarriers (which depends on the standard that is used).
- $z_l$ is the time domain additive noise of the channel during the transmission of the $l^{th}$ symbol.

k+ε corresponds to the frequency shifted by the carrier frequency offset ε. The Carrier Frequency Offset (CFO) will not be considered in the following.

The receiver B comprises a receiving function module RFM which generates demodulated symbols Yl[k] from the received symbols stream yl[n]. The demodulated symbols can then be passed over to other circuitry of the receiver B (not depicted).

The receiving function module RFM may perform different steps which are usual in OFDM systems but may be subject to variations and different implementations.

The high-level schema of the figure 3 shows a possible implementation where the receiving function module RFM comprises:

- a serial-to-parallel convertor or demultiplexer $SP_R$, which parallelizes the received symbol to a set of time symbols $\{y_l(n)\}$.
- A time-to-frequency transformer DFT. This transformer can perform a discrete Fourier Transform of the time symbols $\{y_l(n)\}$ to generate a set of received frequency values $\{Y_l(k)\}$ in the frequency domain, corresponding to determined subcarriers.
- A demodulator DMOD for demodulating the received symbols $\{Y_l(k)\}$ according to the adaptive bit loading scheme used at emitter's side.
- A parallel-to-serial convertor $PS_R$ to produce symbols $Y_l(k)$ made of these received frequency values $\{Y_l(k)\}$. These symbols can then be transmitted to other circuitries of the receiver B (not depicted in the figure).

In order to perform these steps, the receiving function module RFM shares with the emitter A the same subcarriers frequencies, as well as the number of subcarriers N. They could have been communicated beforehand, or they may be set or tuned previously in both the emitter and receiver, for instance according to standards specifications.

In addition, the receiver B also comprises a Channel Estimation Module CEM. This module is in charge of estimating the transmission conditions of the communication channel $C_{AB}$.

It other words, it is in charge of determining an estimated transfer function for the communication channel. In the following, the estimated transfer function will be written $\tilde{H}_{AB}$ to distinguish it from the real (but unknown) transfer function $H_{AB}$.

Such estimation can be performed on the basis of the signal received from the emitter A by the receiver B, by determining its quality and its characteristics. In the embodiment depicted in FIG. 3, the estimation is based on the frequency symbols at the output of the time-to-frequency transformer DFT, but other embodiments are possible without departing from the invention.

The estimated transfer function $\tilde{H}_{AB}$ can be determined by inserting pilot symbols within the data to be transmitted.

The pilot symbols are symbols which are known by both ends (i.e. emitter A and receiver B), so that the receiver can determine the differences between the expected symbol and the actually-received symbol. From these differences due to the perturbation of the communication channel, an estimated transfer function $\tilde{H}_{AB}$ can be derived.

The pilot symbols are transmitted in addition to data symbols (i.e. the payload), and thus involves some overhead. For this reason, they should be kept under a certain amount and some algorithms may be deployed to optimize their use.

The pilot symbols can be chosen to be orthogonal like in the following matrix:

$$X = \begin{bmatrix} X[0] & 0 & \cdots & 0 \\ 0 & X[1] & & \vdots \\ \vdots & & \ddots & 0 \\ 0 & \cdots & 0 & X[N-1] \end{bmatrix}$$

where X[k] denotes a pilot tone at the $k^{th}$ subcarrier, with E(X[k]))0 and var(X[k]=$\sigma^2$, and k ranging from 0 to N-1. It is assumed that there is no ICI (Inter Channel Interference) so that the matrix is a diagonal matrix.

The previously mentioned equation can be rewritten (with no CFO) as the following:

Y=X.H + Z (Where Z is the noise vector)

$$\begin{bmatrix} Y[0] \\ Y[1] \\ \vdots \\ Y[N-1] \end{bmatrix} = \begin{bmatrix} X[0] & 0 & \cdots & 0 \\ 0 & X[1] & & \vdots \\ \vdots & & \ddots & 0 \\ 0 & \cdots & 0 & X[N-1] \end{bmatrix} \begin{bmatrix} H[0] \\ H[1] \\ \\ H[N-1] \end{bmatrix} + \begin{bmatrix} Z[0] \\ Z[1] \\ \\ Z[N-1] \end{bmatrix}$$

In the following, since only one transfer function is considered, the notation H and H̃ will be used instead of $H_{AB}$ and $\tilde{H}_{AB}$, respectively, so as to simplify some equations and improve their readability.

Then, from this equation, several embodiments propose to determine an estimated transfer function H̃. A possibility is to perform a least-square estimation, i.e. to determine the estimated transfer function which minimizes a cost function J which can be provided as:

$$J(\tilde{H}) = \left\| Y - X\tilde{H} \right\|^2$$

This can be rewritten as:

$$J(\tilde{H}) = \left( Y - X\tilde{H} \right)^H \left( Y - X\tilde{H} \right)$$

$$J(\tilde{H}) = Y^H Y - Y^H X\tilde{H} - \tilde{H}^H X^H Y + \tilde{H}^H X^H X\tilde{H}$$

At the minimized point, the derivative of the cost function J should be equal to zero. It means that:

$$\frac{\partial J(\tilde{H})}{\partial \tilde{H}} = 0$$

Therefore:

$$-2\left( X^H Y \right)^* + 2\left( X^H X\tilde{H} \right)^* = 0$$

And thus

$$X^H X \tilde{H} = X^H Y$$

This gives the solution of the least-square channel estimation as:

$$\tilde{H} = \left(X^H X\right)^{-1} X^H Y = X^{-1} Y$$

And consequently:

$$\tilde{H}[k] = \frac{Y[k]}{X[k]}$$

So, the estimated transfer function $\tilde{H}$ can be determined by inserting pilot symbols in the data to be transmitted and from both the pilot symbols as sent $X[k]$ and as received $Y[k]$: somehow, the perturbation between the received pilots and the sent pilots (also known to the receiver B) are representative of the transfer function of the communication channel and can be used as basis for the determination of the estimated transfer function $\tilde{H}$.

Other methods are also possible and accessible to the man skilled in the art to determine the estimated transfer function, e.g. from the sent and received pilot symbols.

According to embodiments of the invention, the estimated transfer function $\tilde{H}$ is determined at different time of a communication session. This is because the transmission conditions over a communication channel $C_{AB}$ are not constant: they can vary according to the move of the emitter A and receiver B, but also because of electro-static conditions.

Accordingly, pilot signals can be included into the preamble signals at the beginning of the OFDM packets. Packets are of size which is tuned to allow assuming that the transmission conditions are reasonably constant, while not implying too much overhead by transmitting too many pilot signals.

The estimated transfer function $\tilde{H}$ can then be determined for each packets of the OFDM signal.

It has been proposed to insert the modulus of the estimated transfer function $\tilde{H}$ into the channel state information $CSI_{AB}$ which is fed back to the emitter A.

However it has been demonstrated by the inventors that the modulus is not sufficient to provide a good model for the transmission conditions of the communication channel $C_{AB}$.

Simulations under different channel conditions showed as result that the modulus (or magnitude) of the channel transfer function is not the only parameter which causes the received OFDM symbols to be deviated from the corresponding constellation point: the phase of the channel transfer has also some importance.

For the inventors, the phase should also be taken into account in order to better allocate an amount of bits of to the sub-carriers by the emitter A, and therefore the complex nature of the estimated transfer function.

According to these experiments, an improvement to the state of the art is achieved by having the emitter A receiving information $CSI_{AB}$ which is determined from the modulus and the phase of the estimated transfer function $\tilde{H}$ of the communication channel.

According to an embodiment of the invention, the channel state information $CSI_{AB}$ contains both the modulus and the phase of the estimated transfer function. An equivalent embodiment may consist in having the channel state information $CSI_{AB}$ containing the estimated transfer function in Cartesian form (i.e. real and imaginary parts), instead of in polar form (i.e. modulus and phase)

In these embodiments, the emitter A may comprise an evaluation circuitry EVAL aiming a determining as information (to be used by the modulator MOD), an error vector magnitude which is computed from the complex estimated channel transfer function $\tilde{H}$ contained within the received channel state information.

More concretely, the evaluation circuitry EVAL can take as inputs the modulus and the phase of the estimated transfer function, which have been inserted in the channel state information, to generate these error vector magnitudes. This information are then fed back as inputs to the modulator MOD, as previously described, in order to properly allocate bits adapted to the channel transmission condition represented and estimated by these error vector magnitudes. The error vector magnitude (or the simplified error vector) can be a vector of values, SEVM(k), each value being representative of the subcarrier k.

The error vector magnitude can be determined according to several methods.

For instance, one can define A and φ to represent respectively the amplitude (or magnitude) and the phase on the OFDM constellation diagram. If we consider k as the sub-carrier index value, a received OFDM subcarrier can be represented as: $A(k) \angle \varphi(k)$.

In a similar way, the complex channel transfer function at f=k can be represented as: $|\tilde{H}(k)| \angle \arg(\tilde{H}(k))$, wherein $|\tilde{H}(k)|$ and $\arg(\tilde{H}(k))$ are respectively the magnitude (or modulus) and phase of the complex transfer function.

Then, an error vector can be defined as:

$$EV(k) = \left\{ A(k) \angle \varphi(k) \right\} \times \left\{ |\tilde{H}(k)| \angle \arg(\tilde{H}(k)) \right\} - A(k) \angle \varphi(k)$$

$$EV(k) = \left\{ A(k) \angle \varphi(k) \right\} \times \left\{ |\tilde{H}(k)| \angle \arg(\tilde{H}(k)) - 1 \right\}$$

However, the adaptive bit loading should be done independently of the transmitted data. For this reason, a simplified error vector SEV(k) can be defined such that:

$$SEV(k) = \left\{ |\tilde{H}(k)| \angle \arg(\tilde{H}(k)) - 1 \right\}$$

The norm or magnitude SEVM(k) of this simplified error vector can be:

$$SEVM(k) = |SEV(k)|$$

$$SEVM(k) = \left\| |\tilde{H}(k)| \angle \arg(\tilde{H}(k)) - 1 \right\|$$

The simplified error vector magnitude can be used as representing the transmission conditions of the communication channel. This result can then be used, as previously described, as input for determining the amount (or number) of bits $b_k$ to be allocated to each subcarriers k (i.e. to each sub-channel formed by these subcarriers).

For instance, using the methodology previously described, the number of bits $b_k$ of the $k^{th}$ subcarrier can be directly linked with the magnitude of the simplified error vector SEVM(k).

According to an embodiment of the invention, such a link can be provided by the following equation:

$$b_k = \log_2 \left( \frac{1 + \dfrac{power(k)}{SEVM^2(k)}}{\Gamma} \right)$$

Wherein

- power(k) is the power per subcarrier. When water filing technique is used, the power varies with k.
- Γ is defined as a ratio of the ideal $SEVM^2(k)$ that the system can transmit at C bits/transmissions, where C is the channel capacity, divided by a "real" $SEVM^2(k)$ at which the system can transmit R bits/transmission. This ratio can be determined by simulations.

From the number of bits $b_k$ per subcarriers, a bit rate $br_k$ per subcarrier can be determined as $br_k = b_k \times s$, wherein s is the OFDM symbol rate. This rate is a value that is specified by the used standard and packet format. For example, in the case of WLAN IEEE 802.11a implementation, the OFDM symbol rate s is 250 k symbols/seconds.

According to these relationships, more bits can be allocated to the subcarriers which have a lower value for the simplified error vector magnitude SEVM.

According to an alternative embodiment, the receiver B can embed the evaluation circuitry EVAL to perform these computing and determine the magnitude of the simplified error vector SEVM(k). Then, instead of inserting into the channel state information $CSI_{AB}$, the modulus and the phase of the estimated transfer function, it can insert directly the simplified error vector magnitude.

By taking into account the phase (i.e. both real and imaginary parts) of the estimated transfer function $\tilde{H}$, more factors contributing to the deterioration of the transmitted signal can be considered. Thus, the performance of the overall OFDM system can be improved to a large extent.

FIG. 4 shows simulation results in terms of BER vs. Eb/N0 (energy per bit to noise power spectral density ratio) for a 64 QAM SISO Rayleigh channel.

The curve C1 represents a transmission without adaptive bit loading (ABL) mechanism.

The curve C2 represents a transmission with ABL according to the state of the art, i.e. depending only on the modulus of the estimated transfer function of the communication channel. It shows some improvement compared to the curve C1.

The curve C3 represents a transmission with ABL according to the invention, i.e. depending on the modulus and on the phase of the estimated transfer function of the communication channel. The improvement is important and, surprisingly, even more important than the improvement shown for the curve C2 compared to the curve C1.

Furthermore, it can be deduced from experimentation that the improvement provided by the invention depends on a characteristic of the communication channel $C_{AB}$. This characteristic has not been discussed so far in the literature and will be called "channel rotation rapidity" here-after.

The improvement provided by the invention is higher when the H(f) vector rotates fast as f changes, and lower when H(f) rotates slowly with the frequency f.

Even with a slow channel rotation, making the adaption of the bit loading determine by both the modulus and the phase of the estimated transfer function provides an improvement.

The invention has been described with reference to preferred embodiments. However, many variations are possible within the scope of the invention.

**Claims**

1. A method for emitting an orthogonal frequency division multiplexing signal through a communication channel ($C_{AB}$) by an emitter (A), comprising:

   Acquiring data to be transmitted,
   De-multiplexing said data over sub-carriers and allocating an amount of bits of said data to said sub-carriers, according to information about the transmission conditions of said sub-carriers over said communication channel ($C_{AB}$), to generate frequency symbols ($X_l[k]$);
   Performing a frequency-to-time conversion of said frequency symbols to generate time symbols ($x_l(n)$), said time symbols being serialized and emitted over said communication channel ($C_{AB}$),
   wherein said information is determined from the modulus and the phase of an estimated transfer function ($\tilde{H}$) of said communication channel ($C_{AB}$).

2. The method of claim 1, wherein said estimated transfer function is determined by inserting pilot symbols within said data to be transmitted and from said pilot symbols as sent and as received.

3. The method of claim 1 or 2, wherein said estimated transfer function is determined for each packets of said orthogonal frequency division multiplexing signal.

4. The method of any of claims 1 to 3, wherein said estimated transfer function is determined by a receiver (B) of said orthogonal frequency division multiplexing signal, on the basis of said signal.

5. The method of previous claim, wherein said modulus and said phase are inserted into a channel state information ($CFI_{AB}$) sent by said receiver (B) to said emitter (A).

6. The method of claim 5, wherein said information is determined as an error vector magnitude computed from said modulus and said phase.

7. The method of claim 6, wherein said error vector magnitude SEVM(k) is computed from said modulus $|\tilde{H}(k)|$ and from said phase $\arg(\tilde{H}(k))$ by: SEVM(k) = $\||\tilde{H}(k)|\angle\arg(\tilde{H}(k))-1|$

8. A computer program product comprising a computer readable medium, having thereon a computer program comprising program instructions, the computer program being loadable into a data-processing unit and adapted to cause execution of the method according to any of claims 1 to 7 when the computer program is run by the data-processing unit.

9. An emitter (A) for emitting an orthogonal frequency division multiplexing signal through a communication channel ($C_{AB}$), comprising
   means for acquiring data to be transmitted,
   serial-to-parallel convertor ($SP_E$) for de-multiplexing said data over sub-carriers,
   modulator (MOD) for allocating an amount of bits of said data to said sub-carriers according to information about the transmission conditions of said sub-carriers over said communication channel ($C_{AB}$), so as to generate frequency symbols ($X_l[k]$);
   frequency-to-time transformer (IDFT) for performing a frequency-to-time transformation of said frequency symbols to generate time symbols ($x_l(n)$),
   parallel-to-serial convertor ($PS_E$) for serializing said time symbols,
   means for emitting them over said communication channel ($C_{AB}$), and evaluation circuitry (EVAL) for determining said information from the modulus and the phase of an estimated transfer function ($\tilde{H}$) of said communication channel ($C_{AB}$).

10. The emitter of claim 9, wherein said evaluation circuitry (EVAL) is adapted to receive channel state information ($CFI_{AB}$) comprising said modulus and said phase.

11. The emitter of claim 9 or 10, wherein said evaluation circuitry (EVAL) is adapted to determine as said information an error vector magnitude computed from said modulus and said phase.

12. The emitter of claim 11, wherein said evaluation circuitry (EVAL) computes said error vector magnitude SEVM(k) from said modulus $|\tilde{H}(k)|$ and from said phase $\arg(\tilde{H}(k))$ by: SEVM(k) = $\||\tilde{H}(k)|\angle\arg(\tilde{H}(k))-1|$

13. A receiver (B) for receiving an orthogonal frequency division multiplexing signal from an emitter (A) through a communication channel ($C_{AB}$), comprising
   a receiving function module (RFM) comprising a serial-to-parallel convertor ($PS_R$) for de-multiplexing said signal into a set of time symbols ($y_l(n)$), and a time-to-frequency transformer (DFT) for performing a time-to-frequency transformation to generate frequency values ($Y_l(k)$) from said time symbols, and,
   a channel estimation module (CEM) adapted for determining an estimated transfer function ($\tilde{H}$) of said communication channel ($C_{FA}$) on the basis of said signal, inserting a modulus and a phase of said estimated transfer function into channel state information ($CFI_{AB}$) and sending said channel state information to said emitter (A).

14. The receiver of claim 13, wherein said channel estimation module (CEM) is adapted to determine said estimated transfer function ($\tilde{H}$) from said frequency values ($Y_l(k)$).

15. System comprising an emitter (A) according to any of claim 9 to 12 and a receiver (B) according to any of claims 13 and 14.

**Fig. 1**

**Fig. 2a**

**Fig. 2b**

**Fig. 2c**

**Fig. 3**

**Fig. 4**

Europäisches
Patentamt

European
Patent Office

Office européen
des brevets

## EUROPEAN SEARCH REPORT

Application Number

EP 13 30 5274

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/271931 A1 (CHENG JUNG-FU [US] ET AL) 28 October 2010 (2010-10-28)<br>* paragraph [[0013]] *<br>* figure 2 *<br>* paragraph [[0017]] *<br>* figure 6 *<br>* paragraph [[0019]] *<br>* figure 8 *<br>* paragraph [[0021]] *<br>* claim 2 *<br>----- | 1-15 | INV.<br>H04L1/00 |
| X | EP 1 786 130 A1 (MATSUSHITA ELECTRIC IND CO LTD [JP]) 16 May 2007 (2007-05-16)<br>* paragraph [[0018]] - paragraph [[0021]] *<br>* figure 3 *<br>* figure 4 *<br>* paragraph [[0029]] - paragraph [[0030]] *<br>* paragraph [[0046]] *<br>----- | 1-15 | |

TECHNICAL FIELDS
SEARCHED        (IPC)

H04L

The present search report has been drawn up for all claims

| Place of search | Date of completion of the search | Examiner |
|---|---|---|
| Berlin | 15 August 2013 | Douglas, Ian |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
...................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 13 30 5274

This annex lists the patent family members relating to the patent documents cited in the above-mentioned European search report.
The members are as contained in the European Patent Office EDP file on
The European Patent Office is in no way liable for these particulars which are merely given for the purpose of information.

15-08-2013

| Patent document cited in search report | Publication date | Patent family member(s) | | Publication date |
|---|---|---|---|---|
| US 2010271931 A1 | 28-10-2010 | CA | 2759845 A1 | 28-10-2010 |
| | | CN | 102415002 A | 11-04-2012 |
| | | CN | 102415003 A | 11-04-2012 |
| | | EP | 2422455 A2 | 29-02-2012 |
| | | EP | 2422456 A2 | 29-02-2012 |
| | | JP | 2012525053 A | 18-10-2012 |
| | | KR | 20120007539 A | 20-01-2012 |
| | | US | 2010271931 A1 | 28-10-2010 |
| | | US | 2010272074 A1 | 28-10-2010 |
| | | US | 2012188972 A1 | 26-07-2012 |
| | | WO | 2010122535 A2 | 28-10-2010 |
| | | WO | 2010122536 A2 | 28-10-2010 |
| EP 1786130 A1 | 16-05-2007 | BR | PI0515461 A | 22-07-2008 |
| | | CN | 101023613 A | 22-08-2007 |
| | | EP | 1786130 A1 | 16-05-2007 |
| | | JP | 4647612 B2 | 09-03-2011 |
| | | KR | 20070052758 A | 22-05-2007 |
| | | US | 2008056181 A1 | 06-03-2008 |
| | | WO | 2006030867 A1 | 23-03-2006 |

EPO FORM P0459

For more details about this annex : see Official Journal of the European Patent Office, No. 12/82

**EP 2 779 504 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **F. SARABCHI ; M. E. KALANTARI.** On the Use of Adaptive Loading Algorithms in MIMO-OFDM systems. *Proc, of ICWN,* 2006, 326-330